Europäisches Patentamt

European Patent Office

Office européen des brevets

(11) Veröffentlichungsnummer: **0 366 819**

**A1**

(12) **EUROPÄISCHE PATENTANMELDUNG**

(21) Anmeldenummer: **88118202.6**

(22) Anmeldetag: **02.11.88**

(51) Int. Cl.⁵: **B65G 35/00**

(43) Veröffentlichungstag der Anmeldung:
**09.05.90 Patentblatt 90/19**

(84) Benannte Vertragsstaaten:
**AT BE CH DE ES FR GB GR IT LI NL SE**

(71) Anmelder: **Festo KG**
**Ruiter Strasse 82**
**D-7300 Esslingen 1(DE)**

(72) Erfinder: **Stoll, Kurt, Dipl.-Ing.**
**Lenzhalde 72**
**D-7300 Esslingen(DE)**
Erfinder: **Müller, Lothar**
**Kornbergweg 5**
**D-7300 Esslingen(DE)**

(74) Vertreter: **Magenbauer, Rudolf, Dipl.-Ing. et al**
**Patentanwälte Dipl.-Ing. Rudolf Magenbauer**
**Dipl.-Phys. Dr. Otto Reimold Dipl.-Phys. Dr.**
**Hans Vetter Hölderlinweg 58**
**D-7300 Esslingen(DE)**

(54) **Druckmittelbetätigbare Transportvorrichtung.**

㊤ Es handelt sich um eine druckmittelbetätigbare Transportvorrichtung, die einen einen Hohlraum (2) begrenzenden Schlauchkörper (1) enthält. Dieser weist flexible, nachgiebige Eigenschaften auf. Außen am Schlauchkörper (1) ist ein Abtriebsteil (4) angeordnet. Dieses enthält zwei einander gegenüberliegend angeordnete Drückelemente (7, 8), die die zwischen sich befindliche Schlauchkörperpartie (10) zusammendrücken. Dadurch verfügt der Schlauchkörper (1) in diesem Bereich im Innern des Hohlraumes (2) über eine dichtende Abtrennung von zwei Arbeitsräumen (5, 6). Wenn einer dieser Arbeitsräume mit Druckmittel beaufschlagt wird, bewegt sich das Abtriebsteil (4) in Längsrichtung (9) des Schlauchkörpers (1).

FIG. 2

## Druckmittelbetätigbare Transportvorrichtung

Die Erfindung betrifft eine druckmittelbetätigbare Transportvorrichtung, mit einem langgestreckten, hohlen Begrenzungsteil, in dem sich zwei in Längsrichtung des Begrenzungsteils aufeinanderfolgend angeordnete Arbeitsräume befinden, die durch ein Abtriebsteil unter Abdichtung voneinander getrennt sind, wobei das mit einer zu transportierenden Kraftabnahme verbindbare Abtriebsteil durch Druckbeaufschlagung jeweils eines der beiden Arbeitsräume unter gleichzeitiger Längenausdehnung dessen in Längsrichtung des Begrenzungsteils von diesem geführt bewegbar ist.

Derartige druckmittelbetätigbare Transportvorrichtungen sind bisher in Gestalt von Kolben-Zylinder-Aggregaten bekannt. Dabei ist das Begrenzungsteil vom Zylinderrohr des Zylinders gebildet und in seinem Innern befindet sich ein in axialer Richtung bewegbarer, das Abtriebsteil darstellender Kolben. Die Verbindung mit einer außerhalb des Zylinders angeordneten Kraftabnahme ermöglicht eine die Stirnseite des Zylinders durchdringende und mit dem Kolben verbundene Kolbenstange.

Derartige Transportvorrichtungen haben den Nachteil, daß sie wegen der aus dem Zylinder herausfahrenden Kolbenstange relativ viel Einbauraum beanspruchen. Außerdem stellt der von der Kolbenstange durchdrungene Bereich des Zylinders eine kritische Stelle dar, an der im Laufe der Zeit Undichtigkeiten auftreten können. Ohnehin ist der Aufwand zur Führung der Kolbenstange und zur Abdichtung des Durchdringungsbereiches recht beachtlich. Von Nachteil ist ferner, daß die bekannten Transportvorrichtungen nur geradlinige Transporte zulassen, was auch mit ein Grund dafür ist, daß der maximale Transportweg stark begrenzt ist, da ein zu langes Zylinderrohr Durchbiegungen ausgesetzt seine könnte.

Der vorliegenden Erfindung liegt daher das Ziel zugrunde, eine insbesondere pneumatisch arbeitende Transportvorrichtung zu schaffen, die bei kompakter Bauweise das Zurücklegen langer Transportwege gestattet, die nur relativ wenig Einbauraum benötigt und die auch nicht-lineare Transporte ermöglicht. Dabei sollen die Verschleißfestigkeit erhöht und die Abdichtungsprobleme vermindert werden.

Dieses Ziel wird dadurch erreicht, daß das Begrenzungsteil ein zumindest im Bereich der möglichen Bewegungsstrecke des Abtriebsteils flexible, nachgiebige Eigenschaften aufweisender druckmitteldichter Schlauchkörper ist, daß das Abtriebsteil außen am Schlauchkörper angeordnet ist, und daß das Abtriebsteil zwei einander gegenüberliegend am Außenumfang des Schlauchkörpers angeordnete Drückelemente enthält, die die jeweils zwischen sich befindliche Schlauchkörperpartie zusammendrücken, so daß der Schlauchkörper in diesem Bereich eine in seinem Innern die dichtende Abtrennung der beiden Arbeitsräume hervorrufende Quetschstelle aufweist.

Auf diese Weise erhält man eine Transportvorrichtung, die funktionsmäßig einem Kolben-Zylinder-Aggregat ähnelt. Durch die beiden Drückelemente wird der Schlauchkörper im Bereich der jeweiligen Position des Abtriebsteils lokal gequetscht, so daß einander gegenüberliegende Schlauchwandbereiche im Innern des Schlauchkörpers dichtend aneinander zur Anlage kommen. Ohne daß im Innern des Schlauchkörpers ein Trennkörper, z.B. in Gestalt eines Kolbens, notwendig wäre, stellt sich dadurch eine gasdichte Trennung zweier Arbeitsräume ein. Wenn dann einer der beiden Arbeitsräume mit Druckmittel beaufschlagt wird, wobei der andere Arbeitsraum z.B. durch Belüften ein geringeres Druckniveau enthält, dann werden die beiden Drückelemente durch das Bedürfnis des Schlauches, sich im Bereich der Quetschstelle in die bei ungequetschtem Zustand eingenommene Normalstellung zu begeben, mit einer axial wirkenden Kraft beaufschlagt, der zufolge sie in Axialrichtung vorwärts bewegt werden. Die einzigen bewegten Teile befinden sich also außerhalb des hierbei als Begrenzungsteil verwendeten Schlauchkörpers, so daß Durchdringungsbereiche für Verbindungsteile nicht vorhanden sind und mithin keine Dichtprobleme auftreten können. Außerdem ist die Montage der Transportvorrichtung sehr einfach, da das Abtriebsteil einfach von außen her an den Schlauchkörper angesetzt werden kann. Auch ist es möglich, eine Kraftabnahme unmittelbar am Abtriebsteil angreifen zu lassen, so daß die benötigte Einbaulänge der Transportvorrichtung im wesentlichen auf die Länge des Schlauchkörpers beschränkt ist. Ferner erlaubt die erfindungsgemäße Transportvorrichtung auch eine Verlegung des Schlauchkörpers in nicht-linearer Form, so daß eine erheblich größere Vielfalt von Einsatzmöglichkeiten erschlossen wird. Auch kann der Schlauchkörper sehr lang ausgebildet werden, so daß über große Wegstrecken transportiert werden kann, da sich Durchbiegungen des Schlauchkörpers nicht negativ auf die Funktionsfähigkeit der Vorrichtung auswirken.

Vorteilhafte Weiterbildungen der Erfindungen sind in den Unteransprüchen aufgeführt. Die Weiterbildung gemäß Anspruch 2 gibt eine besonders leichtgängige Transportvorrichtung vor, da die als Drückwalzen oder Drückrollen ausgebildeten Drückelemente an der Außenseite des Schlauchkörpers abrollen können. Dies erlaubt es auch, die Drückelemente im Bereich der Quetschstelle stark gegeneinander vorzuspannen, so daß absolute Dichtheit im Übergangsbereich zu den beiden Arbeitsräumen gewährleistet ist, ohne daß die Bewegungsfähigkeit des Abtriebsteils beeinträchtigt wäre.

Mit den Weiterbildungen gemäß den Ansprüchen 5 und 8 kann das Abtriebsteil an die Gegebenheiten des jeweils verwendeten Schlauchkörpers leicht angepaßt werden. Auch wenn sich die Materialeigenschaften des Schlauchkörpers im Laufe der Benutzungsdauer ändern sollten, kann hiermit schnell ein Ausgleich geschaffen werden.

Mit der Weiterbildung nach Anspruch 9 kann die Lebensdauer der erfindungsgemäßen Transportvorrichtung nochmals erheblich gesteigert werden. Denn die beiden Einzelschläuche können jeweils im Hinblick auf diejenigen Beanspruchungen ausgelegt werden, denen sie ausgesetzt sind. So ist es möglich, den Innenschlauch aus gasdichtem, z.B. gummielastische Eigenschaften aufweisendem Material herzustellen, das mechanischen Einwirkungen weniger resistent aber für Abdichtaufgaben geradezu prädestiniert ist. Zu seinem Schutze kann dann der den Innenschlauch umschließende Außenschlauch herangezogen werden, der zwar auch flexibel aber hinsichtlich mechanischer Einwirkungen durch die Drückelemente widerstandsfähiger ist. Es kann sich bei den beiden Einzelschläuchen um separate, lose ineinanderliegende Schläuche handeln, beide Schläuche können aber auch im Umfangsbereich z.B. durch Verkleben miteinander verbunden sein. Der Außenschlauch braucht nicht notwendigerweise druckmitteldicht zu sein, er kann, zur Gewährleistung der Flexibilität, durchaus auch Unterbrechungen aufweisen, und z.B. von netzartiger Struktur sein.

Die Erfindung wird nachfolgend anhand der beiliegenden Zeichnung näher erläutert. In dieser zeigen:

Fig. 1 eine erste Ausführungsform der erfindungsgemäßen Transportvorrichtung in schematischer perspektivischer Darstellung, wobei das Abtriebsteil der Übersichtlichkeit halber teilweise aufgebrochen ist,

Fig. 2 einen Längsschnitt durch die Transportvorrichtung aus Fig. 1 gemäß der dort angedeuteten Schnittlinie II-II,

Fig. 3 einen vergrößerten Ausschnitt der Wand des Schlauchkörpers im gestrichelten Bereich III aus Fig.2 und

Fig. 4 eine Querschnitt durch die Transportvorrichtung gemäß Schnittlinie IV-IV aus Fig. 2.

Das abgebildete Ausführungsbeispiel der erfindungsgemäßen druckmittelbetätigbaren Transportvorrichtung verfügt über einen länglichen, sich linear erstreckenden Schlauchkörper 1, der ein Begrenzungsteil darstellt für einen im Innern des Schlauchkörpers 1 eingeschlossenen Hohlraum 2. An seinen beiden axialen Enden ist der Schlauchkörper 1 mittels je weils eines Abschlußdeckels 3 druckmitteldicht verschlossen. Außerdem weist der Schlauchkörper 1 flexible, nachgiebige Eigenschaften auf und ist druckmitteldicht ausgebildet.

Beim abgebildeten bevorzugten Ausführungsbeispiel handelt es sich um einen hohlzylindrischen Schlauchkörper mit im Querschnitt kreisförmiger Gestalt. Der Erfindungsgedanke läßt sich aber auch bei hiervon abweichender Querschnittsform verwirklichen, z.B. bei ovalem oder eckigem Schlauchquerschnitt.

Außen am Schlauchkörper 1 ist im Bereich dessen Außenumfanges ein Abtriebsteil 4 angeordnet. Es hat den Vorteil, zwei Funktionen in sich zu vereinigen, indem es zum einen das bewegbare Teil der Transportvorrichtung darstellt und zum andern gleichzeitig dafür sorgt, daß im Hohlraum 2 zwei jeweils einem der Abschlußdeckel zugeordnete, in Längsrichtung 9 des Schlauchkörpers 1 aufeinanderfolgend angeordnete Arbeitsräume 5, 6 druckmitteldicht voneinander abgetrennt sind.

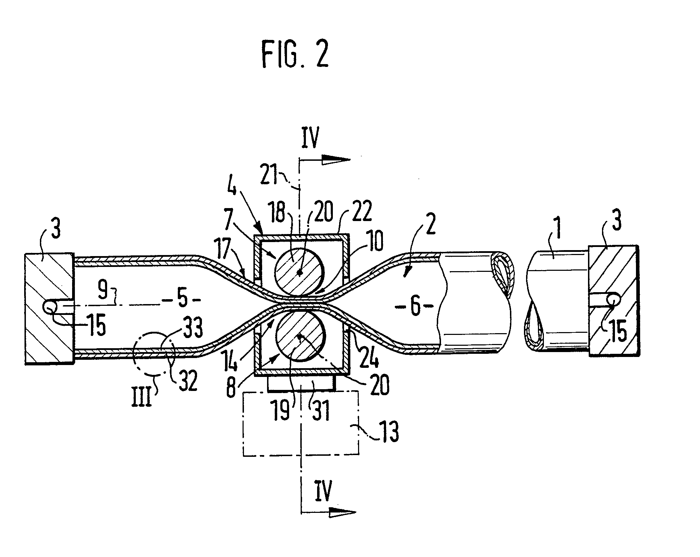

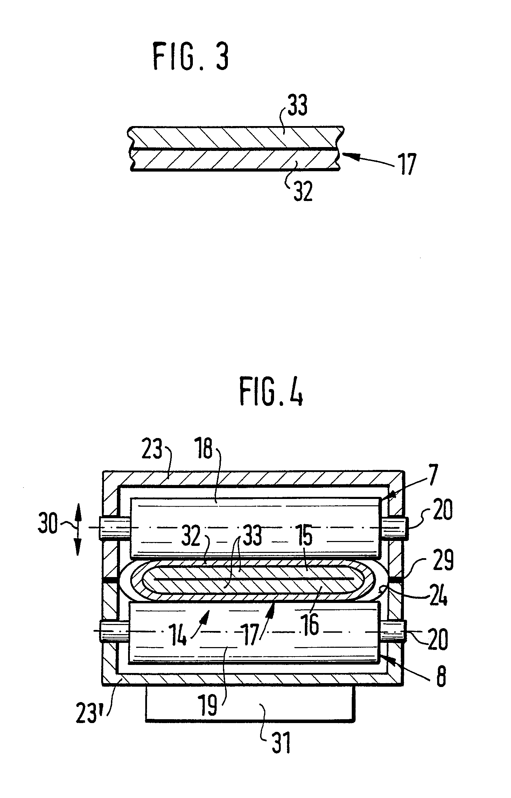

Das Abtriebsteil 4 verfügt über zwei einander diametral gegenüberliegend am Außenumfang des Schlauchkörpers 1 angeordnete Drückelemente 7, 8. Sie arbeiten quer zur Längsrichtung 9 des Schlauchkörpers 1 drückend gegeneinander, wobei sie die zwischen sich befindliche Schlauchkörperpartie 10 zusammendrücken, so daß einander gegenüberliegende Schlauchwandabschnitte 15, 16 aneinander zur Anlage kommen (vgl. Fig. 4). Es entsteht also eine Quetschstelle 14, die im Hohlraum 2 für die druckmitteldichte Trennung der beiden Arbeitsräume 5, 6 sorgt. Da es sich um zwei einander gegenüberliegende Drückelemente 7, 8 handelt, ist der Schlauchkörper 1 im Bereich der Quetschstelle 14 im wesentlichen eben abgeplattet. Wie man der Fig. 2 gut entnehmen kann, erweitert sich der Schlauchkörper 1 im Anschluß an diese Abplattung in einander entgegengesetzte Axialrichtungen bis zur oben beschriebenen kreiszylindrischen Normalgestalt.

Die beiden Arbeitsräume 5, 6 lassen sich abwechselnd mit Druckmittel beaufschlagen. Zweckmäßigerweise wird bei Beaufschlagung des jeweils einen Arbeitsraumes der jeweils andere Arbeitsraum belüftet. Zur Zufuhr und Abfuhr des Druckmittels sind in den Abschlußdeckeln 3 zweckmäßigerweise entsprechende Anschlußöffnungen 15 vorgesehen, die in den zugeordneten Arbeitsraum 5, 6 führen.

Wenn einer der beiden Arbeitsräume 5, 6 in dieser Weise mit Druckmittelbeaufschlagt wird, dann ist die ihn umgebende Wand 17 des Schlauchkörpers 1 im Bereich der Quetschstelle 14 bestrebt, den Normalzustand einzunehmen. Folglich wird die Wand 17 hier nach außen gedrückt, und die Drückelemente 7, 8 erfahren hierbei eine axiale, vom beaufschlagten Druckraum wegweisende Kraftkomponente. Demzufolge wird das Abtriebsteil 4 in Richtung zum belüfteten Arbeitsraum bewegt. Die Bewegung folgt dabei der Längsrichtung 9 des Schlauchkörpers 1 und es läßt sich so eine mit dem Abtriebsteil 4 verbundene Kraftabnahme 13 (in Fig. 2 gestrichelt dargestellt) in entsprechender Weise transportieren. Soll das Abtriebsteil 4 in Gegenrichtung bewegt werden, so braucht nur die Druckmittelzufuhr umgepolt werden.

Das Ausführungsbeispiel hat den besonderen Vorteil, daß die beiden Drückelemente 7, 8 jeweils von einer drehbar gelagerten Drückwalze 18, 19 gebildet sind. Deren Drehachsen sind parallel und im Abstand zueinander angeordnet, wobei sie rechtwinkelig zur Längsrichtung 9 des Schlauchkörpers 1 verlaufen. Zweckmäßigerweise sind sie hierbei in einer gemeinsamen rechtwinkelig zur Längsrichtung 9 verlaufenden Querebene 21 angeordnet. Während der Bewegung des Abtriebsteils 4 können die Drückwalzen 18, 19 am Außenumfang des Schlauchkörpers 1 abrollen, wobei sich die Quetschstelle 14 entsprechend verlagert. Die abrollende Bewegung verursacht eine nur geringe Reibung, so daß sich diese Transportvorrichtung durch besondere Leichtgängigkeit des Abtriebsteils 4 auszeichnet.

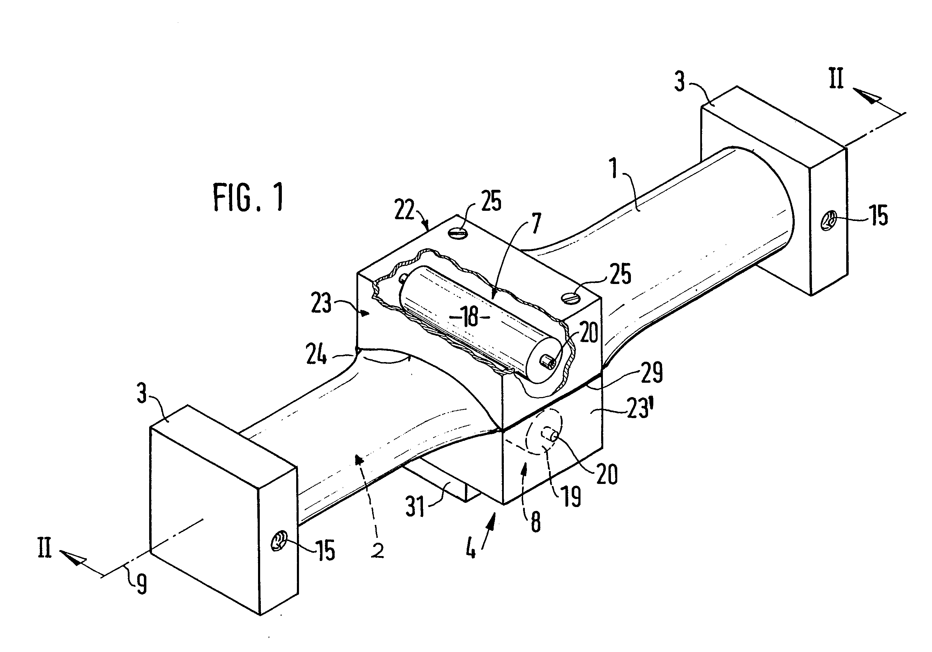

Beim Ausführungsbeispiel enthält das Abtriebsteil 4 ein Gehäuse 22, das den Schlauchkörper 1 umschließt und an dem die Drückwalzen 18, 19 drehbar gelagert sind. Es hat z.B. eine kastenartige Form, wobei die Drückwalzen 18,19 von Wänden des Gehäuses nach außen hin abgedeckt sind, so wie dies die Figuren 1 und 2 besonders gut darstellen. Besonders günstig hinsichtlich der Montage des Abtriebsteils 4 wirkt sich dabei aus, daß das Gehäuse 22 aus zwei lösbar miteinander verbundenen Gehäuseteilen 23, 23' besteht, wobei in jedem der Gehäuseteile eine der Drückwalzen 18, 19 gelagert ist. Diese besitzen zudem an der dem Schlauchkörper 1 zugewandten Seite eine an die Form des Schlauchkörpers 1 zweckmäßigerweise angepaßte Ausnehmung 24, so daß sie sich von entgegengesetzten Seiten den Schlauchkörper 1 bügelartig teilweise umgreifend ansetzen und zu einem ringförmigen Gebilde zusammenfügen lassen. Das Zusammenfügen erfolgt vorzugsweise lösbar, beispielhaft sind in Fig. 1 in den Eckenbereichen der Gehäuseteile angeordnete Verbindungsschrauben 25 angedeutet, die sich parallel zur Querebene 21 erstrecken.

Es ist von Vorteil, wenn mindestens eines der Drückelemente 7, 8 quer zur Längsrichtung 9 des Schlauchkörpers 1 verstellbar und einstellbar ist, so daß die von beiden Drückelementen auf die zwischengefügte Schlauchkörperpartie 10 ausgeübte Drückkraft eingestellt werden kann. Dadurch lassen sich Einstellungen realisieren, die bei guter Dichtheit im Bereich der Quetschstelle 14 eine optimale Bewegungsfähigkeit des Abtriebsteils 4 gewährleisten. Beim dargestellten Ausführungsbeispiel läßt sich der Abstand der beiden Drückwalzen 18, 19 durch Zwischenfügen von insbesondere plättchenförmigen Distanzelementen 29 unterschiedlicher Dicke zwischen die beiden Gehäuseteile 23, 23' bewerkstelligen. Komfortabler ist die Anordnung jedoch, wenn sich der Abstand zwischen den beiden Drückwalzen 18, 19 stufenlos einstellen läßt, z.B. durch eine entsprechende, nicht dargestellte Verstelleinrichtung. Jedenfalls ist es ausreichend, wenn immer nur eine der Drückwalzen verstellbar angeordnet ist. Zweckmäßig kann es sein, die Verstelleinrichtung zwischen einer Drückwalze und dem zugehörigen Gehäuseteil anzuordnen, so daß die Drückwalze gegenüber dem Gehäuseteil parallel zur Querebene 21 gemäß Doppelpfeil 30 hin und her verstellbar ist.

In den Fig. 2 und 4 ist an der Unterseite des Abtriebsteils 4 schematisch eine Befestigungseinrichtung 31 angedeutet, über die die jeweilige Kraftabnahme 13 lösbar am Abtriebsteil 4 festgelegt werden kann. Bei der Kraftabnahme 13 kann es sich beispielsweise um ein zu positionierendes Maschinenteil oder aber ein zu förderndes Gut handeln. Die Transportvorrichtung kann deshalb unter anderem sowohl zu Positionier-und Vorschubzwecke als auch zu Förderzwecken eingesetzt werden.

Bei einfacheren, nicht dargestellten Ausführungsformen ist vorgesehen, daß der Schlauchkörper einstückig ausgebildet ist und aus flexiblem, nachgiebigem Material besteht. Demgegenüber besteht der Schlauchkörper 1 beim Ausführungsbeispiel aus zwei koaxial ineinanderliegend angeordneten Einzelschläuchen 32, 33 (siehe insbesondere Fig. 3). Der Außenschlauch 32 umschließt den Innenschlauch 33, wobei beide Schläuche mit den zugeordneten Umfangsbereichen flächig aneinander anliegen. Beide Schläuche können lose ineinander geschoben sein, es kann sich aber auch um fest miteinander z.B. durch Verkleben miteinander verbundene Teile handeln.

Der Vorteil des zweiteiligen Aufbaues des Schlauchkörpers 1 besteht vor allem darin, daß jeder Teil hinsichtlich seines Aufbaues und seiner Konstruktionsweise an die speziellen Aufgaben angepaßt werden kann, so daß keine Kompromisse eingegangen werden müssen. Beim Ausführungsbeispiel besteht der Innenschlauch 33 aus gasdichtem Material mit gummielastischen Eigenschaften, so daß sowohl zur Außenseite hin als auch im Bereich der Quetschstelle 14 zwischen den beiden Arbeitsräumen 5, 6 eine sichere Abdichtung gewährleistet ist. Zwar ist dieses Schlauchmaterial wenig steif, doch wirkt sich dies hier nicht nachteilig aus, da die erforderliche Steifigkeit durch den Außenschlauch 32 verliehen wird. Er besteht aus einem Material, daß zwar flexibel und nachgiebig ist, so daß es die im Bereich der jeweiligen Quetschstelle stattfindende Verformung klaglos überstehen kann. Andererseits ist das Material des Außenschlauches 32 jedoch extrem verschleißfest, so daß es durch die ablaufenden Drückwalzen 18, 19 kaum verschleißen wird. Beim Ausführungsbeispiel besteht der Außenschlauch 32 aus etwas härterem Kunststoffmaterial.

Bei einer nicht dargestellten Ausführungsform ist der Außenschlauch 32 netzförmig aufgebaut, so daß er kaum mehr als Schlauch bezeichnet werden kann, sondern vielmehr als Schutzhülle. Es ist dann sogar möglich, die Netzstruktur bzw. Gitterstruktur aus Metall herzustellen.

Es ist von besonderem Vorteil, wenn der Schlauchkörper 1 und bei aus zwei Einzelschläuchen 32, 33 bestehendem Schlauchkörper 1 dessen Innenschlauch 33 aus silikonhaltigem Material besteht, wobei es sich vorzugsweise um Silikongummi bzw. Silikonkautschuk handelt. Dadurch wartet der Schlauchkörper mit besonderer Geschmeidigkeit auf und zeichnet sich durch optimale Dichtheit aus, vor allem auch im Bereich der Quetschstelle 14, wenn die Schlauchkörperwandung zusammengepreßt ist und an einander anliegt. Es ist auch möglich, den Schlauchkörper 1 und bei aus zwei Einzelschläuchen bestehendem Schlauchkörper den Innenschlauch 33 durch aufvulkanisieren von Silikongummi-Material auszukleiden. Dies vereinfacht die Herstellung des Schlauchkörpers unter Gewährleistung gasdichter Abdichtung der Arbeitsräume 5, 6 nach außen hin und untereinander im Bereich der Quetschstelle 14.

**Ansprüche**

1. Druckmittelbetätigbare Transportvorrichtung, mit einem langgestreckten, hohlen Begrenzungsteil, in dem sich zwei in Längsrichtung des Begrenzungsteils aufeinanderfolgend angeordnete Arbeitsräume befinden, die durch ein Abtriebsteil unter Abdichtung voneinander getrennt sind, wobei das mit einer zu transportierenden Kraftabnahme verbindbare Abtriebsteil durch Druckbeaufschlagung jeweils eines der beiden Arbeitsräume unter gleichzeitiger Längenausdehnung dessen in Längsrichtung des Begrenzungsteils von diesem geführt bewegbar ist, dadurch gekennzeichnet, daß das Begrenzungsteil ein zumindest im Bereich der möglichen Bewegungsstrecke des Abtriebsteils (4) flexible, nachgiebige Eigenschaften aufweisender druckmitteldichter Schlauchkörper (1) ist, daß das Abtriebsteil (4) außen am Schlauchkörper (1) angeordnet ist, und daß das Abtriebsteil (4) zwei einander gegenüberliegend am Außenumfang des Schlauchkörpers (1) angeordnete Drückelemente (7, 8) enthält, die die jeweils zwischen sich befindliche Schlauchkörperpartie (10) zusammendrücken, so daß der Schlauchkörper (1) in diesem Bereich eine in seinem Innern (2) die dichtende Abtrennung der beiden Arbeitsräume (5, 6) hervorrufende Quetschstelle (14) aufweist.

2. Transportvorrichtung nach Anspruch 1, dadurch gekennzeichnet, daß mindestens eines der Drückelemente (7, 8) und zweckmäßigerweise jedes Drückelement (7, 8) von einer am Abtriebsteil (4) drehbar gelagerten Drückwalze (18, 19) oder Drückrolle gebildet ist, die bei der Bewegung des Abtriebsteils (4) an der Außenseite des Schlauchkörpers (1) abrollt.

3. Transportvorrichtung nach Anspruch 2, dadruch gekennzeichnet, daß die Drehachse (20) jeder Drückwalze (18, 19) bzw. Drückrolle quer zur Längsrichtung (9) des Schlauchkörpers (1) verläuft.

4. Transportvorrichtung nach Anspruch 2 oder 3, dadurch gekennzeichnet, daß die Drehachsen (20) beider Drückwalzen (18, 19) bzw. Drückrollen parallel und im Abstand zueinander angeordnet sind, wobei sie vorzugsweise in einer gemeinsamen Querebene (21) des Schlauchkörpers (1) angeordnet sind.

5. Transportvorrichtung nach einem der Ansprüche 1 bis 4, dadurch gekennzeichnet, daß mindestens ein Drückelement (7, 8) zur Einstellung der Drückkraft quer zur Längsrichtung (9) des Schlauchkörpers (1) und hierbei in Richtung zum gegenüberliegenden Drückelement und in Gegenrichtung verstellbar und einstellbar ist.

6. Tansportvorrichtung nach einem der Ansprüche 1 bis 5, dadurch gekennzeichnet, daß das Abtriebsteil (4) ein den Schlauch körper (1) umschließendes und die Drückelemente (7, 8) tragendes Gehäuse (22) aufweist.

7. Transportvorrichtung nach Anspruch 6, dadurch gekennzeichnet, daß das Gehäuse (22) aus zwei lösbar miteinander verbundenen Gehäuseteilen (23, 23') besteht, wobei jedem der Gehäuseteile (23, 23') zweckmäßigerweise eines der Drückelemente (7, 8) zugeordnet ist.

8. Transportvorrichtung nach Anspruch 6 oder 7, dadurch gekennzeichnet, daß mindestens ein Drückelement (7, 8) quer zur Längsrichtung (9) des Schlauchkörpers (1) verstellbar am Gehäuse (22) angeordnet ist.

9. Transportvorrichtung nach einem der Ansprüche 1 bis 8, dadurch gekennzeichnet, daß der Schlauchkörper (1) aus zwei koaxial ineinanderliegend angeordneten Einzelschläuchen (32, 33) besteht, wobei zweckmäßigerweise der Innenschlauch (33) aus druckmitteldichtem Material und der Außenschlauch (32) aus verschleißfestem, dem Schutze dienenden Material besteht, wobei der Außenschlauch (32) auch von einer Hülle gebildet sein kann, die Druchbrechungen aufweisen kann.

10. Transportvorrichtung nach einem der Ansprüche 1 bis 8, dadurch gekennzeichnet, daß der Schlauchkörper (1) einstückig ausgebildet ist und aus flexiblem, nachgiebigem Material besteht.

11. Transportvorrichtung nach einem der Ansprüche 1 bis 10, dadurch gekennzeichnet, daß der Schlauchkörper (1) im Bereich der Quetschstelle (14) abgeplattet ist.

12. Transportvorrichtung nach einem der Ansprüche 1 bis 11, dadurch gekennzeichnet, daß der Schlauchkörper (1) hohlzylindrisch und hierbei insbesondere mit kreisförmigem Querschnitt ausgebildet ist.

13. Transportvorrichtung nach einem der Ansprüche 1 bis 12, dadurch gekennzeichnet, daß der Schlauchkörper 1 und bei aus zwei Einzelschläuchen bestehendem Schlauchkörper 1 der Innenschlauch 33 aus silikonhaltigem Material und insbesondere aus Silikongummi besteht.

14. Transportvorrichtung nach einem der Ansprüche 1 bis 12, dadurch gekennzeichnet, daß der Schlauchkörper 1 innen mit silikonhaltigem Material und insbesondere mit Silikongummi ausgekleidet ist, wobei der Silikongummi zweckmäßigerweise heiß auf die Innenseite des Schlauchkörpers 1 aufvulkanisiert ist.

FIG. 1

EP 0 366 819 A1

# FIG. 2

# FIG. 3

# FIG. 4

| | Europäisches Patentamt | EUROPÄISCHER RECHERCHENBERICHT | Nummer der Anmeldung |
|---|---|---|---|
| | | | EP 88 11 8202 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | FR-A-1 390 997  (V. GANZINOTTI) <br> * Insgesamt * | 1-8 | B 65 G   35/00 |
| A | | 9-12 | |
| | --- | | |
| A | DE-A-3 322 843  (SIEMENS AG) <br> * Zuammenfassung; Figuren * | 13,14 | |
| | ----- | | |
| | | | **RECHERCHIERTE SACHGEBIETE (Int. Cl.5)** |
| | | | B 65 G <br> A 61 M <br> F 16 K |

Der vorliegende Recherchenbericht wurde für alle Patentansprüche erstellt

| Recherchenort | Abschlußdatum der Recherche | Prüfer |
|---|---|---|
| DEN HAAG | 29-06-1989 | VAN ROLLEGHEM F.M. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
.............................................................................
& : Mitglied der gleichen Patentfamilie, übereinstimmendes Dokument

EPO FORM 1503 03.82 (P0403)